(19)

Europäisches
Patentamt
European
Patent Office
Office européen
des brevets

(11) **EP 2 385 011 B1**

(12) **EUROPEAN PATENT SPECIFICATION**

(45) Date of publication and mention
of the grant of the patent:
**19.09.2012 Bulletin 2012/38**

(51) Int Cl.:
***B66D 1/50*** *(2006.01)*

(21) Application number: **10162339.5**

(22) Date of filing: **07.05.2010**

(54) **A mooring winch and a method for controlling a cable of a mooring winch**

Verholwinde und Verfahren zur Steuerung eines Seils einer Verholwinde

Treuil d'amarrage et procédé pour contrôler un câble d'un treuil d'amarrage

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**09.11.2011 Bulletin 2011/45**

(73) Proprietor: **ABB Oy**
**00380 Helsinki (FI)**

(72) Inventors:
• **Holmberg, Mikael**
**FI-06450, Porvoo (FI)**
• **Jung, Vassili**
**FI-00380, Helsinki (FI)**

(56) References cited:
**EP-A2- 0 676 365      GB-A- 2 013 375
US-A- 4 272 706      US-A1- 2010 116 191**

EP 2 385 011 B1

**Description**

**Field of the invention**

The invention relates to a method for controlling mooring rope tension of a mooring winch. Furthermore, the invention relates to a mooring winch and to a computer program for controlling mooring rope tension of a mooring winch.

**Background of the invention**

When a ship is moored alongside a wharf or a quay in a harbour, mooring ropes anchoring the ship must be properly tensioned so as to hold the ship in an appropriate position. If no effort is made to maintain the mooring ropes in correct tension, a hazardous situation might arise for the reason that the mooring ropes will become subjected to greater forces due to the tendency of the ship to move relative to the wharf or quay. There are a number of factors that may make the ship to move relative to the wharf or quay. These factors can be, for example, variations of the level of water surface due to the cyclic tidal changes and variations of the displacement of the ship due to cargo loading and/or unloading. These factors will cause the ship to vary its altitude with respect to the wharf or quay, and hence will vary the tension of the mooring ropes of a given length between ship and the wharf or quay. Furthermore, the ship might be rocked or rolled by waves or wind to induce a fluctuating tension in the mooring ropes. In a situation in which the movements have great amplitudes, the mooring ropes might fail, resulting in a danger to personnel in the near area and a risk of damages to the ship.

The tension of the rope or the torque of the rope is either measured or computed on the basis of the other measured variables. It is possible to measure the speed of the motor, the torque of the motor or the torque of the winding drum or the tension of the rope.

Publication EP0676365 discloses a winch having at least one winding drum that is connected to an electrical drive via a gearbox. The electrical drive is an asynchronous alternating current motor connected to a speed control device and fitted with a brake device. The speed control has a speed indicator for detecting an existing rotational speed. The speed control device is coordinated by a control unit which may be for example a programmable controller taking the detected rotational speed and a target value of the rotational speed as inputs.

A critical part of the control of the winch is the starting point as the measured or computed value of the torques is not known for the control system. Especially, the measured value does not give an exact value of the tension of the rope and the torques requires on the shaft of the motor and their correlations, because there are gearbox and other losses between the motor shaft and the rope.

Further the speed indicator or the rope tension indicator is susceptible to hard weather conditions especially when the winch is being used as an open deck machinery of a ship.

**Brief description of the invention**

In accordance with a first aspect of the invention, there is provided a new mooring winch. A mooring winch comprising:

- a winding drum for winding a mooring rope ,

- an alternating current motor arranged to drive the winding drum,

- a frequency conversion unit arranged to supply electrical power to the alternating current motor, and

- a control unit arranged to control the frequency conversion unit on the basis of an indicator for tension of the mooring rope,

wherein the control unit is arranged to set a reference value of rotational speed of the ac motor to a predetermined value, to release a brake of the mooring winch, to drive the ac motor in one direction for a predetermined time interval, to define a first value of a torque of the motor, to drive the ac motor in an opposite direction for the predetermined interval, to define a second value of the torque of the motor, and to compute a torque estimate using the first and the second value of the torque.

The gearbox and other possible losses will be eliminated when defining the torque estimate for the rope tension.

In accordance with a second aspect of the invention a new method for controlling mooring rope tension of a mooring winch is provided. The method for controlling the mooring winch comprises a winding drum for winding a mooring rope, an alternating current motor arranged to drive the winding drum, and a frequency conversion unit arranged to supply electrical power to the alternating current motor, wherein the method comprises controlling the frequency conversion unit on the basis of an indicator for tension of the mooring rope, whereby the method further comprises:

- setting a reference value of rotational speed of the ac motor to a predetermined value,

- releasing a brake of the mooring winch,

- driving the ac motor in one direction for a predetermined time interval,

- defining a first value of a torque of the motor,

- driving the ac motor in an opposite direction for another predetermined time interval,

- defining a second value of the torque of the motor, and

- computing a torque estimate using the first and the second value of the torque.

In accordance with a third aspect of the invention, there is provided a computer program for controlling mooring rope tension of a mooring winch, the mooring winch comprising a winding drum for winding a mooring rope, an alternating current motor arranged to drive the winding drum, and a frequency conversion unit arranged to supply electrical power to the alternating current motor, wherein the computer program comprises computer executable instructions for making a programmable processor to control the frequency conversion unit on the basis of an indicator for tension of the mooring rope, wherein computer program further comprises computer executable instructions for making the programmable processor to:

- set a reference value of rotational speed of the ac motor to a predetermined value,

- release a brake of the mooring winch,

- drive the ac motor in one direction for a predetermined time interval,

- define a first value of a torque of the motor,

- drive the ac motor in an opposite direction for the predetermined interval,

- define a second value of the torque of the motor, and

- compute a torque estimate using the first and the second value of the torque.

A number of embodiments of the invention are described in accompanied dependent claims.
Various exemplifying embodiments of the invention both as to constructions and to methods of operation, together with additional objects and advantages thereof, will be best understood from the following description of specific exemplifying embodiments when read in connection with the accompanying drawings.

**Brief description of the figures**

The exemplifying embodiments of the invention and their advantages are explained in greater detail below in the sense of examples and with reference to the accompanying drawings, in which:

figure 1 shows a mooring winch according to an embodiment of the invention,

figure 2 shows a flow chart of a method according to an embodiment of the invention for controlling mooring rope tension of a mooring winch.

figures 3a and 3b illustrate operation of mooring winches according to embodiments of the invention in exemplifying situations, and

**BRIEF DESCRIPTION OF THE INVENTION**

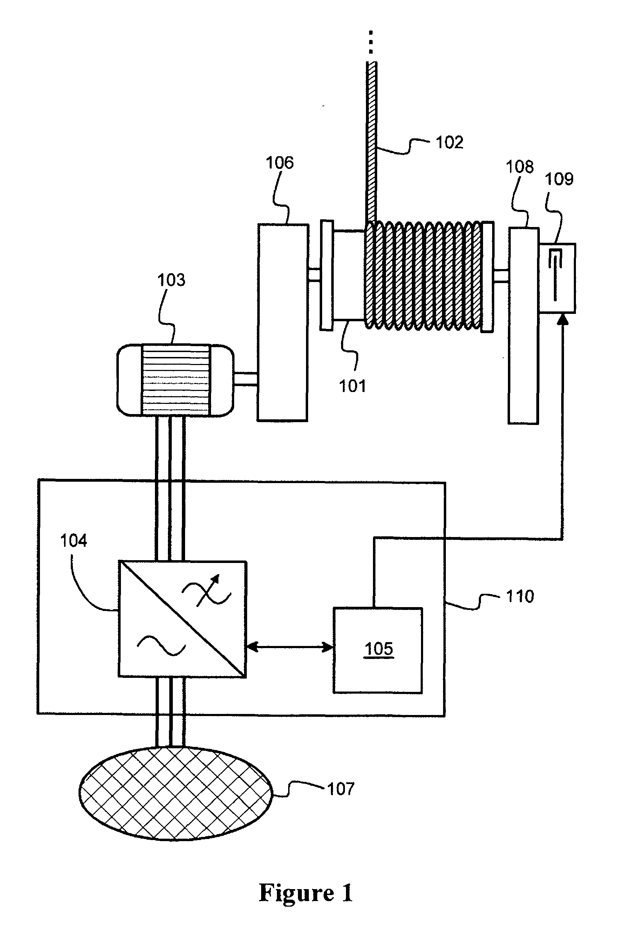

Figure 1 shows a mooring winch according to an embodiment of the invention. The mooring winch comprises a winding drum 101 for winding a mooring rope 102 and an alternating current motor 103 arranged to drive the winding drum. The alternating current motor can be, for example, an induction motor or a permanent magnet synchronous motor. The mooring winch shown in figure 1 has a gearbox 106 between the alternating current motor 103 and the winding drum 101. A brake 109 is arranged in connection of the mooring winch to effect to the winding drum The winding drum is supported with the gearbox and a bearing block 108. Depending on the dimensioning of the alternating current motor and the dimensioning of the winding drum, it is also possible to have a directly driven winding drum so that there is no need for a gearbox. The mooring winch comprises a frequency conversion unit 104 arranged to supply electrical power to the alternating current motor 103. The frequency conversion unit is connected to an electrical supply network 107 that can be e.g. an electrical network of a ship. The mooring winch comprises a control unit 105 arranged to control the frequency conversion unit on the basis of an indicator for tension [kN] of the mooring rope 102. The alternating current motor 103 is preferably driven in a speed controlled mode in such a manner that maximum mooring rope tension that can be created with the speed control is limited in order to avoid hazardous situations. The control unit 105 is preferably arranged to constitute a speed controller for realising the speed control of the alternating current motor. It is also possible to use a separate device arranged to constitute a speed controller. The control unit 105 is arranged to compute a flux space vector ψ for modelling a stator flux of the alternating current motor, and to compute a torque estimate $\mathbf{M}_{est}$ on the basis of the flux space vector and a space vector i of stator currents of the alternating current motor. The torque estimate can be computed as:

$$\mathbf{M}_{est} = \Psi \times \mathbf{i}, \tag{1}$$

where "x" means the vector product (i.e. cross product). The control unit 105 is arranged to use the torque estimate as the indicator for the tension of the mooring rope. Hence, the mooring rope tension is being kept within allowed limits by keeping the torque estimate within allowed limits. The alternating current motor 103 can be controlled with a sensorless vector control, i.e. with vector control in which there is no speed and/or position indicator on the shaft of the alternating current motor. The sensorless vector control can be, for example, the open-loop direct torque control (DTC) in which the space vector **v** of the voltage supplied to the terminals of the alternating current motor is controlled in such a manner that the estimated torque $\mathbf{M}_{est}$ and the amplitude of the flux space vector $|\psi|$ are between desired limits.

The frequency conversion unit 104 and the control unit 105 can be separate devices or, alternatively, they can be parts of a frequency converter 110.

In a mooring winch according to an embodiment of the invention, the control unit 105 is arranged to carry out the following actions for starting an automatic mooring operation:

- to set a reference value of rotational speed of the ac motor to a predetermined value,

- to release a brake of the mooring winch,

- to drive the ac motor in one direction for a predetermined time interval,

- to define a first value of a torque of the motor,

- to drive the ac motor in an opposite direction for the predetermined interval,

- to define a second value of the torque of the motor, and

- to compute a torque estimate using the first and the second value of the torque.

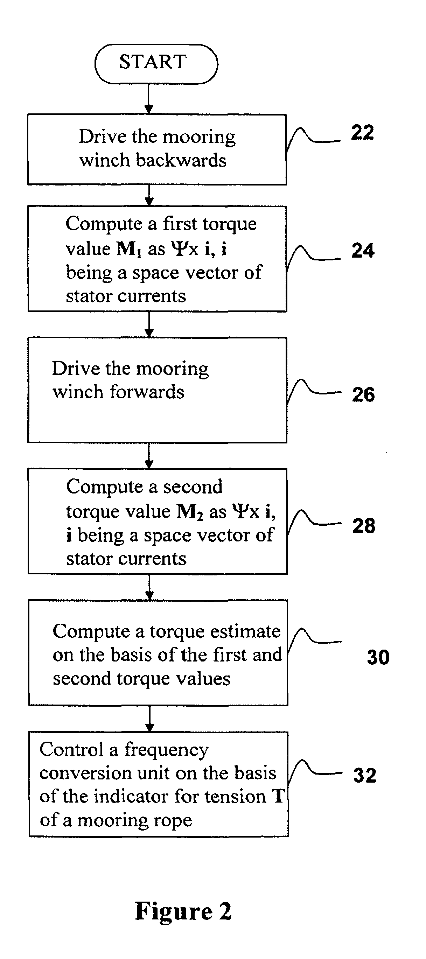

Figure 2 is a flow chart of a method according to an embodiment of the invention for controlling mooring rope tension of a mooring winch. The method comprises:

In phase 22, the mooring winch is driven backwards. A predetermined speed reference value is set and the motor is driven backwards for a short time interval.

In phase 24, during the backwards drive a first torque value is computed $\mathbf{M}_1$ as ψx i, i being a space vector of stator currents.

In phase 26, the mooring winch is driven forwards. A predetermined speed reference value is set and the motor is driven backwards for a short time interval. The speed reference value and the short time interval are preferably the same as in phase 22, but they can also differ from them.

In phase 28, during the forwards drive a second torque value is computed $M_2$ as $\psi$x i, i being a space vector of stator currents.

In phase 30 a torque estimate is computed on the basis of the first and second torque values. The torque estimate may be computed as an average of the first and the second torque values. It is also possible to compute the torque estimate as a weighted average.

In phase 32 a frequency conversion unit on the basis of the indicator for tension T of a mooring rope. The control unit basis compares the indicator for tension T of a mooring rope to the user set value. On the basis of the comparison the control unit chooses if the mooring drum is driven in or out.

The pre-determined set value of torque is an upper limit for the target value of the torque produced by the alternating current motor. If the first value of the torque estimate is significantly higher than the pre-determined set value, the mooring rope is too tight and the mooring rope shall be wound out. Correspondingly, if the first value of the torque estimate is significantly lower than the pre-determined set value, the mooring rope is too slack and the mooring rope shall be wound in. It is also undesirable that the mooring rope is too slack since a slack mooring rope allows harmful mechanical movements.

In a mooring winch according to an embodiment of the invention, the control unit 105 is arranged to carry out the following successive phases for accomplishing a periodical mooring operation. A method according to a corresponding embodiment of the invention comprises the following successive phases for accomplishing a periodical mooring operation:

- Starting the periodical mooring operation

- The mooring winch is driven backwards. A predetermined speed reference value is set and the motor is driven backwards for a short time interval.

- During the backwards drive a first torque value is computed $M_1$ as $\psi$x i, i being a space vector of stator currents.

- The mooring winch is driven forwards. A predetermined speed reference value is set and the motor is driven backwards for a short time interval. The speed reference value and the short time interval are preferably the same as in phase 22, but they can also differ from them.

- The forwards drive a second torque value is computed $M_2$ as $\psi$x i, i being a space vector of stator currents.

- A torque estimate is computed on the basis of the first and second torque values

- Conditional phase A: controlling the alternating current motor to wind the mooring rope in as a response to a situation in which the computed torque estimate is lower than a first limit value,

- Conditional phase B: controlling the alternating current motor to wind the mooring rope out as a response to a situation in which the computed torque estimate is higher than a second limit value,

- Phase C: waiting a predetermined time interval,

- Re-starting the periodical mooring operation procedure.

The above-mentioned second limit value is greater than or equal to the above-mentioned first limit value, i.e. H+ $\geq$ H-.

A method according to an embodiment of the invention for accomplishing a periodical mooring operation comprises the similar successive phases.

In a mooring winch according to another embodiment of the invention, the control unit 105 is arranged to keep the alternating current motor continuously energized and controlled in order to provide continuous mooring operation.

In a method according to another embodiment of the invention, the alternating current motor is continuously energized and controlled in order to provide continuous mooring operation.

The periodical mooring operation saves energy compared to the continuous mooring operation because, in the periodical mooring operation, the alternating current motor is de-energized during a significant portion of time.

A mooring winch according to an embodiment of the invention comprises a control interface for enabling selection between the above-described periodical mooring operation and the continuous mooring operation.

There are different ways to realize the brake of the mooring winch. For example, the brake 109 can be arranged as depicted in figure 1, or the brake can be integrated with the motor 103, or the brake can be integrated with the gearbox 106, or there can be a brake in conjunction with more than one of the following: the motor, the gearbox, and the bearing block 108. The brake can be, for example, a disc brake or a drum brake.

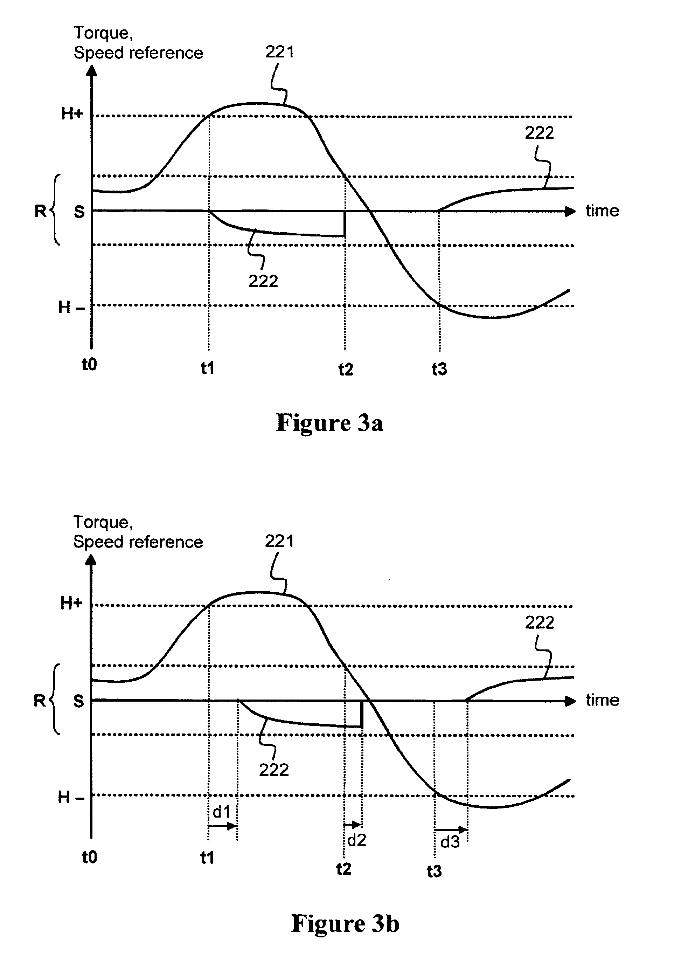

Figure 3a illustrates operation of mooring winches according to embodiments of the invention in exemplifying situations. The curve 221 represents the torque estimate and the curve 222 represents a speed reference of the alternating current motor. It should be noted that the speed reference 222 coincides with the time-axis during time intervals t0...t1 and t2...t3. The term "speed reference" means here the reference value of the rotational speed of the alternating current motor 103 (figure 1). The reference value of the rotational speed and is not necessarily constant but it can vary over time.

In a mooring winch according to an embodiment of the invention, the control unit 105 (figure 1) is arranged to make the alternating current motor 103 (figure 1) to wind the mooring rope 102 (figure 1) in as a response to a situation in which the torque estimate 221 goes below a first pre-determined hysteresis limit value H-, and to make the alternating current motor to wind the mooring rope out as a response to a situation in which the torque estimate exceeds a second pre-determined hysteresis limit value H+. The second pre-determined hysteresis limit value H+ is greater than the first pre-determined hysteresis limit value H-. In this document, the sign of the rotational speed of the alternating current motor is chosen in such a manner that the mooring rope is wound in, i.e. the mooring rope tension is increased, when the alternating current motor has a positive direction of rotation. Hence, the mooring rope can be wound in by making the speed reference 222 positive and the mooring rope can be wound out by making the speed reference 222 negative. In the exemplifying situation shown in figure 3a, the torque estimate exceeds the hysteresis limit value H+ at the time instant t1 and thus the speed reference 222 is made negative in order to reduce the mooring rope tension. At the time instant t3, the torque estimate goes below the hysteresis limit value H- and thus the speed reference is made positive in order to increase the mooring rope tension.

In a mooring winch according to an embodiment of the invention, the control unit 105 (figure 1) is arranged to set the speed reference 222 to zero as a response to a situation in which the torque estimate 221 is within a pre-determined range R. The pre-determined range R is around a pre-determined set value S of torque. The pre-determined set value S can be an upper limit for a target value of torque, the target value of torque being for example an output of a speed controller and being able to vary over time. In the exemplifying situation shown in figure 3a, the estimated torque 221 gets into the pre-determined range R at the time instant t2 and thus the speed reference 222 is set to zero at the time instant t2.

Figure 3b illustrates operation of mooring winches according to embodiments of the invention in exemplifying situations. The curve 221 represents the torque estimate and curve 222 represents a speed reference of the alternating current motor. Please, note that the speed reference 222 coincides with the time-axis during time intervals t0...t1+d1 and t2+d2...t3+d3.

In a mooring winch according to an embodiment of the invention, the control unit 105 (figure 1) is arranged to make the alternating current motor 103 (figure 1) to wind the mooring rope102 (figure 1) in as a response to a situation in which a first pre-determined delay d3 has elapsed after the torque estimate 221 went below the hysteresis limit value H-, and to make the alternating current motor to wind the mooring rope out as a response to a situation in which a second pre-determined delay d1 has elapsed after the torque estimate 221 exceeded the hysteresis limit value H+. In the exemplifying situation shown in figure 3b, the torque estimate exceeds the hysteresis limit value H+ at the time instant t1 and thus the speed reference 222 is made negative after the delay d1 in order to reduce the mooring rope tension. At the time instant t3, the torque estimate goes below the hysteresis limit value H- and thus the speed reference is made positive after the delay d3 in order to increase the mooring rope tension. With the aid of the said delays it is possible to avoid unnecessary, and possibly oscillating, control actions for example in a situation in which the torque estimate 221 oscillates around one of the said hysteresis limits H+ and H-.

In a mooring winch according to an embodiment of the invention, the control unit 105 (figure 1) is arranged to set the speed reference 222 to zero as a response to a situation in which a pre-determined delay d2 has elapsed after the torque estimate 221 entered the pre-determined range R. In the exemplifying situation shown in figure 3a, the estimated torque 221 gets into the pre-determined range R at the time instant t2 and thus the speed reference 222 is set to zero at the time instant t2+d2.

In a mooring winch according to an embodiment of the invention, the control unit 105 (figure 1) is arranged to constitute a speed controller for controlling the rotational speed of the alternating current motor 103 (figure1). An output of the speed controller is a target value of torque that can vary over time. The pre-determined set value S of torque is preferably an upper limit for the target value of torque.

A method according to an embodiment of the invention comprises selection between the above-described periodical mooring operation and the continuous mooring operation.

In a method according to an embodiment of the invention, the alternating current motor is controlled to wind the mooring rope in as a response to a situation in which the torque estimate 221 (figure 3a) goes below a first pre-determined limit value H- (figure 3a), and the alternating current motor is controlled to wind the mooring rope out as a response to a situation in which the torque estimate 221 (figure 3a) exceeds a second pre-determined limit value H+ (figure 3a), the second pre-determined limit value being greater than the first pre-determined limit value.

In a method according to an embodiment of the invention, a reference value 222 (figure 3a) of rotational speed of the alternating current motor is set to zero as a response to a situation in which the torque estimate 221 (figure 3a) is within a pre-determined range R (figure 3a), the pre-determined range being around a pre-determined set value S (figure 3a) of torque.

In a method according to an embodiment of the invention, the alternating current motor is controlled to wind the mooring rope in as a response to a situation in which a first pre-determined delay d3 (figure 3b) has elapsed after the torque estimate 221 (figure 3b) went below the first pre-determined limit value H- (figure 3b), and the alternating current motor is controlled to wind the mooring rope out as a response to a situation in which a second pre-determined delay d1 (figure 3b) has elapsed after the torque estimate 221 (figure 3b) exceeded the second pre-determined limit value H+ (figure 3b), the second pre-determined limit value being greater than the first pre-determined limit value.

In a method according to an embodiment of the invention, the reference value 222 (figure 3b) of rotational speed of the alternating current motor is set to zero as a response to a situation in which a pre-determined delay d2 (figure 3b) has elapsed after the torque estimate 221 (figure 3b) entered a pre-determined range R, the pre-determined range being around a pre-determined set value S (figure 3b) of torque.

In a method according to an embodiment of the invention, the pre-determined set value S (figures 3a and 3b) of torque is an upper limit for a target value of torque, the target value of torque being an output of a speed controller arranged to control the rotational speed of the alternating current motor.

A computer program according to an embodiment of the invention comprises computer executable instructions for controlling mooring rope tension of a mooring winch that includes a winding drum for winding a mooring rope, an alternating current motor arranged to drive the winding drum, and a frequency conversion unit arranged to supply electrical power to the alternating current motor. The above-mentioned computer executable instructions are capable of controlling a programmable processor to:

- compute a flux space vector for modelling a stator flux of the alternating current motor,

- compute a torque estimate on the basis of the flux space vector and a space vector of stator currents of the alternating current motor,

- use the torque estimate as an indicator for tension of the mooring rope, and

- control the frequency conversion unit on the basis of the indicator for the tension of the mooring rope.

A computer readable medium according to an embodiment of the invention is encoded with a computer program according to an embodiment of the invention. The computer readable medium can be, for example, an optical compact disc read only memory (CD-ROM).

A signal according to an embodiment of the invention is adapted to carry information specifying a computer program according to an embodiment of the invention.

The specific examples provided in the description given above should not be construed as limiting. Therefore, the invention is not limited merely to the embodiments described above, many variants being possible.

**Claims**

1. A mooring winch comprising:

   - a winding drum (101) for winding a mooring rope (102),
   - an alternating current motor (103) arranged to drive the winding drum,
   - a frequency conversion unit (104) arranged to supply electrical power to the alternating current motor, and
   - a control unit (105) arranged to control the frequency conversion unit on the basis of an indicator for tension of the mooring rope,

   **characterized in that** the control unit is arranged to set a reference value of rotational speed of the ac motor to a predetermined value, to release a brake of the mooring winch, to drive the ac motor in one direction for a predetermined time interval, to define a first value of a torque of the motor, to drive the ac motor in an opposite direction for the predetermined interval, to define a second value of the torque of the motor, and to compute a torque estimate using the first and the second value of the torque.

**2.** A mooring winch according to claim 1, wherein

- The tension of the rope is measured by a sensor,
- The measured tension of the rope is input to the control unit.

**3.** A mooring winch according to claim 1, wherein the control unit is arranged

- to compute a flux space vector for modelling a stator flux of the alternating current motor,
- to compute the first and the second value of the torque on the basis of the flux space vector and a space vector of stator currents of the alternating current motor.

**4.** A mooring winch according to claim 1, wherein the speed of the motor is measured and the measured speed is input to the control unit.

**5.** A mooring winch according to claim 1, wherein the control unit is arranged to make the alternating current motor to wind the mooring rope in as a response to a situation in which the torque estimate (221) goes below a first pre-determined limit value (H-), and to make the alternating current motor to wind the mooring rope out as a response to a situation in which the torque estimate exceeds a second pre-determined limit value (H+), the second pre-determined limit value being greater than the first pre-determined limit value.

**6.** A mooring winch according to claim 1, wherein the control unit is arranged to make the alternating current motor to wind the mooring rope in as a response to a situation in which a first pre-determined delay (d3) has elapsed after the torque estimate (221) went below a first pre-determined limit value (H-) and to make the alternating current motor to wind the mooring rope out as a response to a situation in which a second pre-determined delay (d1) has elapsed after the torque estimate (221) exceeded a second pre-determined limit value (H+), the second pre-determined limit value being greater than the first pre-determined limit value.

**7.** A mooring winch according to claim 1, wherein the control unit is arranged to carry out the following successive phases for accomplishing a periodical mooring operation:

- conditional phase A: controlling the alternating current motor to wind the mooring rope in as a response to a situation in which the computed torque estimate is lower than a first limit value,
- conditional phase B: controlling the alternating current motor to wind the mooring rope out as a response to a situation in which the computed torque estimate is higher than a second limit value,
- phase C: waiting a predetermined time interval, re-computing the torque estimate and continuing from the phase A.

**8.** A method for controlling mooring rope tension of a mooring winch, the mooring winch comprising a winding drum for winding a mooring rope, an alternating current motor arranged to drive the winding drum, and a frequency conversion unit arranged to supply electrical power to the alternating current motor, wherein the method comprises controlling (304) the frequency conversion unit on the basis of an indicator for tension of the mooring rope, **characterized in that** the method further comprises:

- setting a reference value of rotational speed of the ac motor to a predetermined value,
- releasing a brake of the mooring winch,
- driving the ac motor in one direction for a predetermined time interval,
- defining a first value of a torque of the motor,
- driving the ac motor in an opposite direction for another predetermined time interval,
- defining a second value of the torque of the motor, and
- to computing a torque estimate using the first and the second value of the torque.

**9.** A method according to claim 8, wherein the method comprises:

- computing a flux space vector for modelling a stator flux of the alternating current motor and ,
- computing the first and the second value of the torque on the basis of the flux space vector and a space vector of stator currents of the alternating current motor.

**10.** A method according to claim 8, wherein the alternating current motor is controlled to wind the mooring rope in as a response to a situation in which the torque estimate (221) goes below a first pre-determined limit value (H-), and the alternating current motor is controlled to wind the mooring rope out as a response to a situation in which the torque estimate exceeds a second pre-determined limit value (H+), the second pre-determined limit value being greater than the first pre-determined limit value.

11. A method according to claim 8, wherein the alternating current motor is controlled to wind the mooring rope in as a response to a situation in which a first pre-determined delay (d3) has elapsed after the torque estimate (221) went below a first pre-determined limit value (H-) and the alternating current motor is controlled to wind the mooring rope out as a response to a situation in which a second pre-determined delay (d1) has elapsed after the torque estimate (221) exceeded a second pre-determined limit value (H+), the second pre-determined limit value being greater than the first pre-determined limit value.

12. A method according to claim 8, wherein the method comprises the following successive phases for accomplishing a periodical mooring operation:

- conditional phase A: controlling the alternating current motor to wind the mooring rope in as a response to a situation in which the computed torque estimate is lower than a first limit value,
- conditional phase B: controlling the alternating current motor to wind the mooring rope out as a response to a situation in which the computed torque estimate is higher than a second limit value,
- phase C: waiting a predetermined time interval, re-computing the torque estimate and continuing from the phase A.

13. A computer program for controlling mooring rope tension of a mooring winch, the mooring winch comprising a winding drum for winding a mooring rope, an alternating current motor arranged to drive the winding drum, and a frequency conversion unit arranged to supply electrical power to the alternating current motor, wherein the computer program comprises computer executable instructions for making a programmable processor to control the frequency conversion unit on the basis of an indicator for tension of the mooring rope, **characterized in that** computer program further comprises computer executable instructions for making the programmable processor to:

- set a reference value of rotational speed of the ac motor to a predetermined value,
- release a brake of the mooring winch,
- drive the ac motor in one direction for a predetermined time interval,
- define a first value of a torque of the motor,
- drive the ac motor in an opposite direction for the predetermined interval,
- define a second value of the torque of the motor, and
- compute a torque estimate using the first and the second value of the torque.

**Patentansprüche**

1. Vertäuungswinde, die Folgendes umfasst:

- eine Wickeltrommel (101) zum Wickeln eines Vertäuungsseils (102),
- einen Wechselstrommotor (103), der dafür ausgelegt ist, die Wickeltrommel anzutreiben,
- einen Frequenzumsetzer (104), der dafür ausgelegt ist, den Wechselstrommotor mit elektrischem Strom zu versorgen, und
- eine Steuereinheit (105), die dafür ausgelegt ist, den Frequenzumsetzer anhand eines Indikators für die Zugspannung des Vertäuungsseils zu steuern,

**dadurch gekennzeichnet, dass** die Steuereinheit dafür ausgelegt ist, einen Referenzwert der Drehzahl des Wechselstrommotors auf einen vorgegebenen Wert zu setzen, eine Bremse der Vertäuungswinde zu lösen, den Wechselstrommotor über ein vorgegebenes Zeitintervall in einer bestimmten Richtung anzusteuern, einen ersten Wert eines Drehmoments des Motors zu definieren, den Wechselstrommotor in einer entgegengesetzten Richtung über das vorgegebene Intervall anzusteuern, einen zweiten Wert des Drehmoments des Motors zu definieren, und eine Drehmomentschätzung unter Verwendung des ersten und des zweiten Wertes des Drehmoments zu berechnen.

2. Vertäuungswinde nach Anspruch 1, wobei

- die Zugspannung des Seils durch einen Sensor gemessen wird und
- die gemessene Zugspannung des Seils in die Steuereinheit eingespeist wird.

3. Vertäuungswinde nach Anspruch 1, wobei die Steuereinheit dafür ausgelegt ist,

- einen Fluss-Raum-Vektor zum Modellieren eines Statorflusses des Wechselstrommotors zu berechnen und
- den ersten und den zweiten Wert des Drehmoments anhand des Fluss-Raum-Vektors und eines Raum-Vektors von Stator-Strömen des Wechselstrommotors zu berechnen.

4. Vertäuungswinde nach Anspruch 1, wobei die Drehzahl des Motors gemessen wird und die gemessene Drehzahl in die Steuereinheit eingegeben wird.

5. Vertäuungswinde nach Anspruch 1, wobei die Steuereinheit dafür ausgelegt ist, den Wechselstrommotor zu veranlassen, das Vertäuungsseil aufzurollen, wenn eine Situation eintritt, in der die Drehmomentschätzung (221) unter einen ersten vorgegebenen Grenzwert (H-) abfällt, und den Wechselstrommotor zu veranlassen, das Vertäuungsseil abzurollen, wenn eine Situation eintritt, in der die Drehmomentschätzung einen zweiten vorgegebenen Grenzwert (H+) übersteigt, wobei der zweite vorgegebene Grenzwert größer ist als der erste vorgegebene Grenzwert.

6. Vertäuungswinde nach Anspruch 1, wobei die Steuereinheit dafür ausgelegt ist, den Wechselstrommotor zu veranlassen, das Vertäuungsseil aufzurollen, wenn eine Situation eintritt, in der eine erste vorgegebene Verzögerung (d3) verstrichen ist, nachdem die Drehmomentschätzung (221) unter einen ersten vorgegebenen Grenzwert (H-) abgefallen ist, und den Wechselstrommotor zu veranlassen, das Vertäuungsseil abzurollen, wenn eine Situation eintritt, in der eine zweite vorgegebene Verzögerung (d1) verstrichen ist, nachdem die Drehmomentschätzung (221) einen zweiten vorgegebenen Grenzwert (H+) überstiegen hat, wobei der zweite vorgegebene Grenzwert größer ist als der erste vorgegebene Grenzwert.

7. Vertäuungswinde nach Anspruch 1, wobei die Steuereinheit dafür ausgelegt ist, die folgenden aufeinanderfolgenden Phasen abzuarbeiten, um einen periodischen Vertäuungsablauf auszuführen:

- bedingte Phase A: Veranlassen des Wechselstrommotors, das Vertäuungsseil aufzurollen, wenn eine Situation eintritt, in der die berechnete Drehmomentschätzung niedriger ist als ein erster Grenzwert,
- bedingte Phase B: Veranlassen des Wechselstrommotors, das Vertäuungsseil abzurollen, wenn eine Situation eintritt, in der die berechnete Drehmomentschätzung höher ist als ein zweiter Grenzwert,
- Phase C: Abwarten eines vorgegebenen Zeitintervalls, Neuberechnen der Drehmomentschätzung und Fortsetzung des Prozesses ab Phase A.

8. Verfahren zum Steuern der Zugspannung eines Vertäuungsseils einer Vertäuungswinde, wobei die Vertäuungswinde Folgendes umfasst: eine Wickeltrommel zum Wickeln eines Vertäuungsseils, einen Wechselstrommotor, der dafür ausgelegt ist, die Wickeltrommel anzutreiben, und einen Frequenzumsetzer, der dafür ausgelegt ist, den Wechselstrommotor mit elektrischem Strom zu versorgen, wobei das Verfahren umfasst, den Frequenzumsetzer anhand eines Indikators für die Zugspannung des Vertäuungsseils zu steuern (304), **dadurch gekennzeichnet, dass** das Verfahren des Weiteren Folgendes umfasst:

- Einstellen eines Referenzwertes der Drehzahl des Wechselstrommotors auf einen vorgegebenen Wert,
- Lösen einer Bremse der Vertäuungswinde,
- Ansteuern des Wechselstrommotors in einer bestimmten Richtung über ein vorgegebenes Zeitintervall,
- Definieren eines ersten Wertes eines Drehmoments des Motors,
- Ansteuern des Wechselstrommotors in einer entgegengesetzten Richtung über ein weiteres vorgegebenes Zeitintervall,
- Definieren eines zweiten Wertes des Drehmoments des Motors, und
- Berechnen einer Drehmomentschätzung unter Verwendung des ersten und des zweiten Wertes des Drehmoments.

9. Verfahren nach Anspruch 8, wobei das Verfahren Folgendes umfasst:

- Berechnen eines Fluss-Raum-Vektors zum Modellieren eines Statorflusses des Wechselstrommotors, und
- Berechnen des ersten und des zweiten Wertes des Drehmoments anhand des Fluss-Raum-Vektors und eines Raum-Vektors von Stator-Strömen des Wechselstrommotors.

**10.** Verfahren nach Anspruch 8, wobei der Wechselstrommotor veranlasst wird, das Vertäuungsseil aufzurollen, wenn eine Situation eintritt, in der die Drehmomentschätzung (221) unter einen ersten vorgegebenen Grenzwert (H-) abfällt, und der Wechselstrommotor veranlasst wird, das Vertäuungsseil abzurollen, wenn eine Situation eintritt, in der die Drehmomentschätzung einen zweiten vorgegebenen Grenzwert (H+) übersteigt, wobei der zweite vorgegebene Grenzwert größer ist als der erste vorgegebene Grenzwert.

**11.** Verfahren nach Anspruch 8, wobei der Wechselstrommotor veranlasst wird, das Vertäuungsseil aufzurollen, wenn eine Situation eintritt, in der eine erste vorgegebene Verzögerung (d3) verstrichen ist, nachdem die Drehmomentschätzung (221) unter einen ersten vorgegebenen Grenzwert (H-) abgefallen ist, und der Wechselstrommotor veranlasst wird, das Vertäuungsseil abzurollen, wenn eine Situation eintritt, in der eine zweite vorgegebenen Verzögerung (d1) verstrichen ist, nachdem die Drehmomentschätzung (221) einen zweiten vorgegebenen Grenzwert (H+) überstiegen hat, wobei der zweite vorgegebene Grenzwert größer ist als der erste vorgegebene Grenzwert.

**12.** Verfahren nach Anspruch 8, wobei das Verfahren die folgenden aufeinanderfolgenden Phasen umfasst, um einen periodischen Vertäuungsablauf auszuführen:

- bedingte Phase A: Veranlassen des Wechselstrommotors, das Vertäuungsseil aufzurollen, wenn eine Situation eintritt, in der die berechnete Drehmomentschätzung niedriger ist als ein erster Grenzwert,
- bedingte Phase B: Veranlassen des Wechselstrommotors, das Vertäuungsseil abzurollen, wenn eine Situation eintritt, in der die berechnete Drehmomentschätzung höher ist als ein zweiter Grenzwert,
- Phase C: Abwarten eines vorgegebenen Zeitintervalls, Neuberechnen der Drehmomentschätzung und Fortsetzung des Prozesses ab Phase A.

**13.** Computerprogramm zum Steuern der Zugspannung eines Vertäuungsseils einer Vertäuungswinde, wobei die Vertäuungswinde Folgendes umfasst: eine Wickeltrommel zum Wickeln eines Vertäuungsseils, einen Wechselstrommotor, der dafür ausgelegt ist, die Wickeltrommel anzutreiben, und einen Frequenzumsetzer, der dafür ausgelegt ist, den Wechselstrommotor mit elektrischem Strom zu versorgen, wobei das Computerprogramm durch einen Computer ausführbare Instruktionen umfasst, um einen programmierbaren Prozessor zu veranlassen, den Frequenzumsetzer anhand eines Indikators für die Zugspannung des Vertäuungsseils zu steuern, **dadurch gekennzeichnet, dass** das Computerprogramm des Weiteren durch einen Computer ausführbare Instruktionen umfasst, um den programmierbaren Prozessor zu veranlassen:

- einen Referenzwert der Drehzahl des Wechselstrommotors auf einen vorgegebenen Wert einzustellen,
- eine Bremse der Vertäuungswinde zu lösen,
- den Wechselstrommotor über ein vorgegebenes Zeitintervall in einer bestimmten Richtung anzusteuern,
- einen ersten Wert eines Drehmoments des Motors zu definieren,
- den Wechselstrommotor über das vorgegebene Intervall in einer entgegengesetzten Richtung anzusteuern,
- einen zweiten Wert des Drehmoments des Motors zu definieren und
- eine Drehmomentschätzung unter Verwendung des ersten und des zweiten Wertes des Drehmoments zu berechnen.

**Revendications**

**1.** Treuil d'amarrage comportant :

- un tambour d'enroulement (101) pour enrouler une amarre (102),
- un moteur à courant alternatif (103) conçu pour entraîner le tambour d'enroulement,
- une unité de conversion de fréquence (104) conçue pour délivrer de l'énergie électrique au moteur à courant alternatif, et
- une unité de commande (105) conçue pour commander l'unité de conversion de fréquence sur la base d'un indicateur pour la tension de l'amarre,

**caractérisé en ce que** l'unité de commande est conçue pour établir une valeur de référence de vitesse de rotation du moteur à courant alternatif à une valeur prédéterminée, relâcher un frein du treuil d'amarrage, entraîner le moteur à courant alternatif dans un sens pendant un intervalle de temps prédéterminé, définir une première valeur d'un couple du moteur, entraîner le moteur à courant alternatif dans un sens opposé pendant l'intervalle prédéterminé, définir une deuxième valeur du couple du moteur, et calculer une estimation de couple en utilisant la première valeur et la deuxième valeur du couple.

2. Treuil d'amarrage selon la revendication 1, dans lequel

- la tension de l'amarre est mesurée par un capteur,
- la tension mesurée de l'amarre est entrée dans l'unité de commande.

3. Treuil d'amarrage selon la revendication 1, dans lequel l'unité de commande est conçue pour :

- calculer un vecteur d'espace de flux pour modéliser un flux de stator du moteur à courant alternatif,
- calculer la première valeur et la deuxième valeur du couple sur la base du vecteur d'espace de flux et d'un vecteur d'espace de courants de stator du moteur à courant alternatif.

4. Treuil d'amarrage selon la revendication 1, dans lequel la vitesse du moteur est mesurée et la vitesse mesurée est entrée dans l'unité de commande.

5. Treuil d'amarrage selon la revendication 1, dans lequel l'unité de commande est conçue pour amener le moteur à courant alternatif à enrouler l'amarre en réponse à une situation dans laquelle l'estimation de couple (221) se situe au-dessous d'une première valeur limite prédéterminée (H-), et pour amener le moteur à courant alternatif à dérouler l'amarre en réponse à une situation dans laquelle l'estimation de couple dépasse une seconde valeur limite prédéterminée (H+), la seconde valeur limite prédéterminée étant supérieure à la première valeur limite prédéterminée.

6. Treuil d'amarrage selon la revendication 1, dans lequel l'unité de commande est conçue pour amener le moteur à courant alternatif à enrouler l'amarre en réponse à une situation dans laquelle un premier délai prédéterminé (d3) s'est écoulé depuis que l'estimation de couple (221) est descendue au-dessous d'une première valeur limite prédéterminée (H-), et pour amener le moteur à courant alternatif à dérouler l'amarre en réponse à une situation dans laquelle un second délai prédéterminé (d1) s'est écoulé depuis que l'estimation de couple (221) a dépassé une seconde valeur limite prédéterminée (H+), la seconde valeur limite prédéterminée étant supérieure à la première valeur limite prédéterminée.

7. Treuil d'amarrage selon la revendication 1, dans lequel l'unité de commande est conçue pour exécuter les phases successives suivantes afin d'accomplir une opération d'amarrage périodique :

- phase conditionnelle A : commander le moteur à courant alternatif pour enrouler l'amarre en réponse à une situation dans laquelle l'estimation de couple calculée est inférieure à une première valeur limite,
- phase conditionnelle B : commander le moteur à courant alternatif pour dérouler l'amarre en réponse à une situation dans laquelle l'estimation de couple calculée dépasse une seconde valeur limite,
- phase conditionnelle C : attendre pendant un intervalle de temps prédéterminé, recalculer l'estimation de couple et poursuivre depuis la phase A.

8. Procédé pour commander une tension d'amarrage d'un treuil d'amarrage, le treuil d'amarrage comportant un tambour d'enroulement pour enrouler une amarre, un moteur à courant alternatif conçu pour entraîner le tambour d'enroulement, et une unité de conversion de fréquence conçue pour délivrer de l'énergie électrique au moteur à courant alternatif, dans lequel le procédé comporte la commande (304) de l'unité de conversion de fréquence sur la base d'un indicateur pour la tension de l'amarre, **caractérisé en ce que** le procédé comporte en outre :

- l'établissement d'une valeur de référence de vitesse de rotation du moteur à courant alternatif à une valeur prédéterminée,
- le relâchement d'un frein du treuil d'amarrage,
- l'entraînement du moteur à courant alternatif dans un sens pendant un intervalle de temps prédéterminé,
- la définition d'une première valeur d'un couple du moteur,
- l'entraînement du moteur à courant alternatif dans un sens opposé pendant un autre intervalle de temps prédéterminé,
- la définition d'une deuxième valeur du couple du moteur, et
- le calcul d'une estimation de couple en utilisant la première valeur et la deuxième valeur du couple.

9. Procédé selon la revendication 8, dans lequel le procédé comporte :

- le calcul d'un vecteur d'espace de flux pour modéliser un flux de stator du moteur à courant alternatif,
- le calcul de la première valeur et la deuxième valeur du couple sur la base du vecteur d'espace de flux et d'un vecteur d'espace de courants de stator du moteur à courant alternatif.

10. Procédé selon la revendication 8, dans lequel la vitesse du moteur à courant alternatif est commandée pour enrouler l'amarre en réponse à une situation dans laquelle l'estimation de couple (221) se situe au-dessous d'une première valeur limite prédéterminée (H-), et le moteur à courant alternatif est commandé pour dérouler l'amarre en réponse à une situation dans laquelle l'estimation de couple dépasse une seconde valeur limite prédéterminée (H+), la seconde valeur limite prédéterminée étant supérieure à la première valeur limite prédéterminée.

11. Procédé selon la revendication 8, dans lequel le moteur à courant alternatif est commandé pour enrouler l'amarre en réponse à une situation dans laquelle un premier délai prédéterminé (d3) s'est écoulé depuis que l'estimation de couple (221) est descendue au-dessous d'une première valeur limite prédéterminée (H-), et le moteur à courant alternatif est commandé pour dérouler l'amarre en réponse à une situation dans laquelle un second délai prédéterminé (d1) s'est écoulé depuis que l'estimation de couple (221) a dépassé une seconde valeur limite prédéterminée (H+), la seconde valeur limite prédéterminée étant supérieure à la première valeur limite prédéterminée.

12. Procédé selon la revendication 8, dans lequel le procédé comporte les phases successives suivantes afin d'accomplir une opération d'amarrage périodique :

- phase conditionnelle A : commander le moteur à courant alternatif pour enrouler l'amarre en réponse à une situation dans laquelle l'estimation de couple calculée est inférieure à une première valeur limite,
- phase conditionnelle B : commander le moteur à courant alternatif pour dérouler l'amarre en réponse à une situation dans laquelle l'estimation de couple calculée dépasse une seconde valeur limite,
- phase conditionnelle C : attendre pendant un intervalle de temps prédéterminé, recalculer l'estimation de couple et poursuivre depuis la phase A.

13. Programme informatique pour commander une tension d'amarrage d'un treuil d'amarrage, le treuil d'amarrage comportant un tambour d'enroulement pour enrouler une amarre, un moteur à courant alternatif conçu pour entraîner le tambour d'enroulement, et une unité de conversion de fréquence conçue pour délivrer de l'énergie électrique au moteur à courant alternatif, dans lequel le programme informatique comporte des instructions exécutables par ordinateur pour amener un processeur programmable à commander l'unité de conversion de fréquence sur la base d'un indicateur pour la tension de l'amarre, **caractérisé en ce que** le programme informatique comporte en outre des instructions exécutables par ordinateur pour amener le processeur programmable à effectuer :

- l'établissement d'une valeur de référence de vitesse de rotation du moteur à courant alternatif à une valeur prédéterminée,
- le relâchement d'un frein du treuil d'amarrage,
- l'entraînement du moteur à courant alternatif dans un sens pendant un intervalle de temps prédéterminé,
- la définition d'une première valeur d'un couple du moteur,
- l'entraînement du moteur à courant alternatif dans un sens opposé pendant l'intervalle de temps prédéterminé,
- la définition d'une deuxième valeur du couple du moteur, et
- le calcul d'une estimation de couple en utilisant la première valeur et la deuxième valeur du couple.

**Figure 1**

```
                    ┌─────────────────┐
                    │      START      │
                    └─────────────────┘
                             │
                             ▼
        ┌──────────────────────────────┐
        │      Drive the mooring        │  ⌇──  **22**
        │       winch backwards         │
        └──────────────────────────────┘
                             │
                             ▼
        ┌──────────────────────────────┐
        │    Compute a first torque     │
        │    value $M_1$ as $\Psi$x i, i │  ⌇──  **24**
        │    being a space vector of    │
        │       stator currents         │
        └──────────────────────────────┘
                             │
                             ▼
        ┌──────────────────────────────┐
        │      Drive the mooring        │  ⌇──  **26**
        │       winch forwards          │
        └──────────────────────────────┘
                             │
                             ▼
        ┌──────────────────────────────┐
        │      Compute a second         │
        │    torque value $M_2$ as $\Psi$x i, │  ⌇──  **28**
        │    i being a space vector of  │
        │       stator currents         │
        └──────────────────────────────┘
                             │
                             ▼
        ┌──────────────────────────────┐
        │   Compute a torque estimate   │  ⌇──
        │   on the basis of the first and│      **30**
        │   second torque values        │
        └──────────────────────────────┘
                             │
                             ▼
        ┌──────────────────────────────┐
        │   Control a frequency         │
        │   conversion unit on the basis│  ⌇──  **32**
        │   of the indicator for tension T│
        │   of a mooring rope           │
        └──────────────────────────────┘
```

## Figure 2

**Figure 3a**

**Figure 3b**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0676365 A